# EUROPEAN PATENT APPLICATION

(11) **EP 4 793 821 A1**
(43) Date of publication of application: **19.08.2026**
(21) Application number: 25812609.3
(22) Date of filing: 05.06.2025
(51) Int. Cl.: G06F 40/56

(54) **INFORMATION PROCESSING METHOD, PROGRAM, AND INFORMATION PROCESSING DEVICE**

(30) Priority: 18.12.2024 JP 2024223119
(71) Applicant: Aizoth Inc., Tsukuba-shi, Ibaraki 305-0031 (JP)
(72) Inventor: KAWAJIRI Kotaro, Tsukuba-shi, Ibaraki 305-0031 (JP)
(74) Representative: Gille Hrabal Partnerschaftsgesellschaft mbB Patentanwälte
(86) International application number: PCT/JP2025/020466
(87) International publication number: WO 2026/133598

(57) **Abstract**

[Challenge] To effectively assist in creating a document.

[Solving Means] Provided is an information processing method for assisting in creating a document. The method includes creating a prompt on the basis of user input information based on an input by a user and a prompt template, causing a generative AI model to generate generated data on the basis of the prompt, and creating document data on the basis of the generated data. The creating the prompt, the causing the generative AI model to generate the generated data, and the creating the document data are performed by at least one computer.

## Description

### TECHNICAL FIELD

The present invention relates to an information processing method, program, and information processing apparatus.

### BACKGROUND ART

Patent Literature 1 discloses a technology for assisting in creating a document.

### Citation List

### Patent Literature

[Patent Literature 1] Japanese Unexamined Patent Application Publication No. 2009-080645

### SUMMARY OF THE INVENTION

### Problem to be Solved by the Invention

The present inventors have found a novel assistance technology that enhances document creation efficiency by incorporating the results of the recent technological innovation in the field of artificial intelligence.

The present invention is intended to effectively assist in creating a document.

### [Means for Solving the Problem]

The present invention provides an information processing method for assisting in creating a document. The information processing method includes creating a prompt on the basis of user input information based on an input by a user and a prompt template, causing a generative AI model to generate generated data on the basis of the prompt, and creating document data on the basis of the generated data. The creating the prompt, the causing the generative AI model to generate the generated data, and the creating the document data are performed by at least one computer.

The present invention is able to effectively assist in creating the document by utilizing the generative AI model.

### BRIEF DESCRIPTION OF THE DRAWINGS

FIG. 1 illustrates an information processing apparatus 1 according to an embodiment and servers associated therewith.
FIG. 2A is a hardware configuration diagram of the information processing apparatus 1, and FIG. 2B is a function block diagram of a control unit 12.
FIG. 3 is a flowchart showing an example of an information processing method according to the embodiment.
FIG. 4 shows an example of an input UI screen 130 according to the embodiment.
FIG. 5A shows an example of a preview UI screen 140 (display language: Japanese), and FIG. 5B is a diagram illustrating a description corresponding to a record M006 (heading string Hd_{M006}: Results).
FIG. 6A shows an example of an edit UI screen 150, and FIG. 6B shows an example of the edit UI screen 150 after performing an edit operation.
FIG. 7 shows an example of a pop-up UI screen 160 presented in an evaluation step.
FIG. 8 is a flowchart showing a modification of the embodiment.

### DESCRIPTION OF EMBODIMENTS

One or more embodiments of the present invention will be described below with reference to the drawings. Various features described in the embodiments below can be combined with each other. Each feature independently establishes the present invention.

For example, one of simple embodiments provided by the present disclosure is a "document creation assistance technology using a generative AI model" and, more specifically, a "document creation assistance technology that automatically creates document data by providing prompts to generative AI models so that the generative AI models generate pieces of generated data and combining the pieces of generated data." Any one or more of various features of embodiments may be combined with this simple document creation assistance technology. This technology can be provided in the form of an information processing method, a computer program, an information processing apparatus, or an information processing system. In the embodiment, for example, this technology assists in creating a paper (particularly, an academic paper).

In the following description, the term "and/or" has the following meanings. For example, in the case of elements α and β, "α and/or β" includes all of "only α of α and β," "only β of α and β," and "α and β." It should be noted that addition of other elements (e.g., γ) is not excluded in principle. Other elements such as γ can be arbitrarily combined with "α and/or β" through "and" or "or" unless the combination is explicitly prohibited or impossible.

In the following description, the term "main" may represents a property or proportion. When "main" represents a property, for example, "main portion" means a principal portion, an important portion, a portion that determines the overall tendency, or the like. On the other hand, when "main" represents a proportion, "main" means a "majority." The majority may be a majority (over 50%) of the whole or a group with the largest proportion among all groups (e.g., a 40% group among 40%, 20%, 20%, and 20% groups). In the embodiment, a proportion represented by "main" may be defined by, for example, the following numerical ranges. Specifically, for example, a proportion represented by "main" may be 50% or more, 60% or more, or 70% or more. A proportion represented by "main" may also be, for example, 25%, 30%, 35%, 40%, 45%, 50%, 55%, 60%, 65%, 70%, 75%, 80%, 85%, 90 %, or 95% or more, or even 100%, or may fall within the range between any two of the values listed above (e.g., 40-90%). The property or proportion represented by "main" described above may be used as, for example, the "proportion of a specific character (e.g., an alphabetic character) in a string" or the "proportion of a specific word (e.g., an English word) in text or content."

### 1. Configuration of Embodiment

### 1-1. Overall Configuration of System

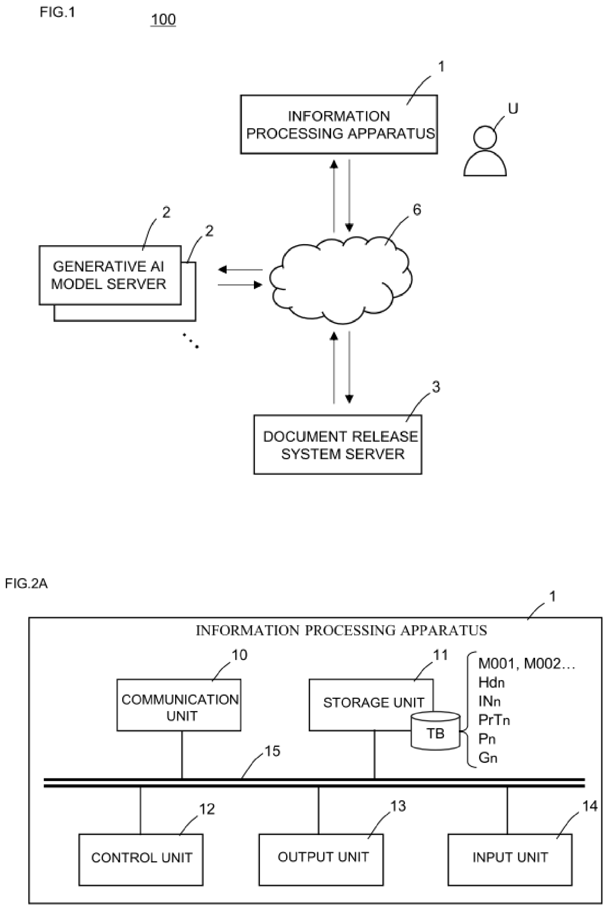

FIG. 1 illustrates an information processing system 100 according to an embodiment. The information processing system 100 includes, for example, an information processing apparatus 1 according to the embodiment and servers associated therewith. In the embodiment, for example, the associated servers include at least one generative AI model server 2 and at least one document publishing system server 3. The associated servers may additionally include at least one of any translation server, any analysis application server, and any RAG (retrieval-augmented generation) system server. To simplify the description of the embodiment, a case in which a user U operates the information processing apparatus 1 will be described. However, this case is only illustrative. For example, the information processing apparatus 1 may be provided as a server, or the user U may access the information processing apparatus 1 using their own mobile terminal or the like through a communication network 6, or an information processing method according to the embodiment may be provided as a cloud web service.

In FIG. 1, for example, multiple generative AI model servers 2 are communicatively connected to the information processing apparatus 1 through the communication network 6. The generative AI model servers 2 each include, for example, a neural network trained using a large amount of training data. The generative AI model servers 2 have a function of generating a response to data (a prompt) outputted from the information processing apparatus 1 and outputting it to the information processing apparatus 1. The generative AI model servers 2 may be of any type, for example, may be large language models (LLM). In the embodiment, for example, the multiple generative AI model servers 2 are used selectively or in combination.

The document publishing system server 3 shown in FIG. 1 is communicatively connected to the information processing apparatus 1 through the communication network 6. The document publishing system server 3 may be any type of known document publishing system, for example, a paper publishing system.

### 1-2. Hardware Configuration of Information Processing Apparatus

As shown in FIG. 2A, the information processing apparatus 1 includes, for example, a communication unit 10, a storage unit 11, a control unit 12, an output unit 13, and an input unit 14. These components are electrically connected through a communication bus 15 within the information processing apparatus 1. The information processing apparatus 1 is also a "computer" that performs information processing according to the embodiment.

The communication unit 10 may use, for example, wired communication means such as USB, IEEE 1394, Thunderbolt^{®}, or wired LAN network communication. The communication unit 10 may be connected to the communication network 6 through wireless communication means, such as wireless LAN network communication, mobile communication such as 3G, LTE, or 5G, or Bluetooth^{®} communication. The communication unit 10 may use both the wired communication means and wireless communication means.

The storage unit 11 stores, for example, various programs of the information processing apparatus 1 executed by the control unit 12 and various types of values such as constants, variables, and set values. A storage device such as a solid-state drive (SSD), random-access memory (RAM) for storing temporarily required information related to program calculation (arguments, arrays, etc.), and the like may be used as the storage unit 11. The information processing apparatus 1 may use the storage unit 11, as well as an external storage device (e.g., an external storage medium, cloud storage, etc.).

The control unit 12 is configured to perform processing and control related to information processing of the information processing apparatus 1. The control unit 12 may consist of, for example, a central processing unit (CPU). In the embodiment, the control unit 12 is an example of a processor capable of executing a program related to steps in a flowchart (to be described later). For example, the control unit 12 implements various functions related to the information processing apparatus 1 by reading a program stored in the storage unit 11. Moreover, when various programs stored in, for example, the storage unit 11 are processed by the control unit 12 as hardware, information processing of software in the information processing apparatus 1 is realized.

The output unit 13 is, for example, the display unit of information processing apparatus 1. The output unit 13 may be contained in the housing of the information processing apparatus 1 or may be externally attached thereto. The output unit 13 displays a graphical user interface (GUI) screen operable by the user. The output unit 13 may be a display device such as a CRT display, a liquid crystal display, an organic EL display, a plasma display, an electronic paper display, a head-mounted display, or smart glass. It may also be a display device such as a lighting device or projector. Note that the output unit 13 is optional and the information processing apparatus 1 does not have to include it. For example, as a modification, the output of the information processing apparatus 1 may be displayed on a display unit at an independent location remote from the location in which the information processing apparatus 1 is placed. The output unit 13 may include a device for outputting audio.

The input unit 14 is configured to receive, for example, operational inputs made by the user of the information processing apparatus 1. The input unit 14 may be contained in the housing of the information processing apparatus 1 or may be externally attached thereto. The input unit 14 may be, for example, a touchscreen, switch buttons, a mouse, a keyboard, or the like. Note that the input unit 14 is optional and the information processing apparatus 1 does not have to include it. For example, as a modification, the information processing apparatus 1 may receive operational inputs through an information processing terminal at an independent location remote from the location in which the information processing apparatus 1 is placed.

### 1-3. Function Block Configuration of Information Processing Apparatus

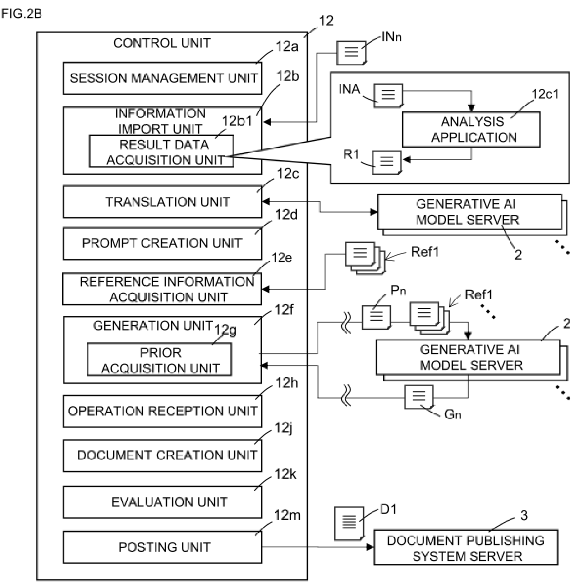

Referring to FIG. 2B, the function configuration of the information processing apparatus 1 according to the present embodiment will be described. The control unit 12 of the information processing apparatus 1 includes, for example, a session management unit 12a, an information import unit 12b, a result data acquisition unit 12b1, a translation unit 12c, a prompt creation unit 12d, a reference information acquisition unit 12e, a generation unit 12f, a prior acquisition unit 12g, an operation reception unit 12h, a document creation unit 12j, an evaluation unit 12k, and a posting unit 1 2m. To provide these function units, information processing based on software stored in the storage unit 11 is concretely performed by the control unit 12, which is an example of hardware. The information processing apparatus 1 sends and receives various types of data to and from the generative AI model servers 2 through an (application programming interface (API). Examples of the various types of data sent and received include prompts Pₙ, reference literature information Ref1, pieces of generated data Gₙ, and the like.

The above function units may be provided by any means, for example, by software or hardware. When implementing the function units by software, the functions may be implemented by execution of a computer program by the CPU. The program may be stored on a non-transitory computer-readable storage medium, or may be provided so as to be downloadable from an external server. The functions may be implemented through so-called cloud computing, which implements functions by reading a program stored in an external storage unit. When implementing the functions by hardware, the functions may be implemented by various circuits such as ASIC, FPGA, or DRP. Various types of information and concepts including them are handled in the embodiment. Those are represented by high or low signal values, which are binary bit sets consisting of 0s and 1s, or quantum bits and can be communicated and subjected to calculation by the above software or hardware mode. The software may be a general-purpose OS or a dedicated OS.

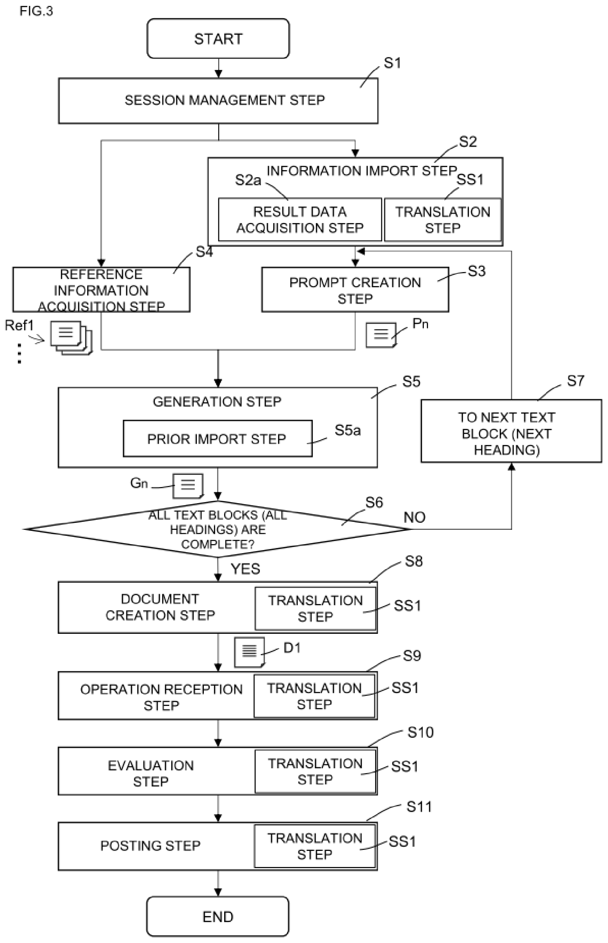

The function units in FIG. 2B are configured to perform steps (S1 to S11) in the flowchart of FIG. 3 (to be described later). The session management unit 12a is configured to perform a session management step S1 (see FIG. 3). The information import unit 12b is configured to perform an information import step S2 (see FIG. 3) and is configured to acquire pieces of user input information INₙ.

The result data acquisition unit 12b1 is configured to perform a result data acquisition step S2a (see FIG. 3). The result data acquisition unit 12b1 includes, for example, an analysis application 12c1. The analysis application 12c1 receives input data INA, performs an analysis process within, and outputs result data R1. In a modification, the analysis application 12c1 may be provided on an external server (e.g., a cloud web service). In this case, it is configured to access the information processing apparatus 1 through the communication network 6.

The translation unit 12c is configured to perform a translation step SS1 (see FIG. 3). The translation unit 12c is configured to perform a translation between any different multiple natural languages (e.g., English and Japanese, etc.). The translation unit 12c is configured, for example, to be invoked on another unit when required. In the embodiment, for example, the translation unit 12c causes the generative AI model servers 2 to perform a translation. For example, the translation unit 12c performs a translation step by providing a translation instruction prompt, text to be translated, or the like to the generative AI model servers 2.

The prompt creation unit 12d is configured to perform a prompt creation step S3 (see FIG. 3) and is able to create prompts Pₙ. The reference information acquisition unit 12e is configured to perform a reference information acquisition step S4 (see FIG. 3) and is configured to acquire reference literature information Ref1.

The generation unit 12f is configured to a perform a generation step S5 (see FIG. 3). The prior import unit 12g is configured to perform a prior import step S5a (see FIG. 3). The generation unit 12f and prior import unit 12g are configured to access the generative AI model servers 2. The generative AI model servers 2 receive the prompts Pₙ and reference literature information Ref1 and generate generated data Gₙ corresponding to them as responses.

The document creation unit 12j is configured to perform a document creation step S8 (see FIG. 3). The operation reception unit 12h is configured to perform an operation reception step S9 (see FIG. 3). The evaluation unit 12k is configured to perform an evaluation step S10 (see FIG. 3). The posting unit 12m is configured to perform a posting step S11 (see FIG. 3) and is able to send document data D1 to the document publishing system server 3.

A more detailed description of the steps performed by the function units will be provided when describing the flowchart of FIG. 3 later.

### 2. Operation (information processing) according to Embodiment

### 2-1. Premises

Referring to FIGS. 3 to 7, an operation according to the embodiment (i.e., information processing) will be described. FIG. 3 is a flowchart showing an example of the information processing method according to the embodiment. Specific process steps according to the embodiment are defined in FIG. 3. A program according to the embodiment causes a computer (information processing apparatus 1) to perform the steps (the information processing method according to the embodiment) shown in FIG. 3.

### 2-1-1. UI Screen

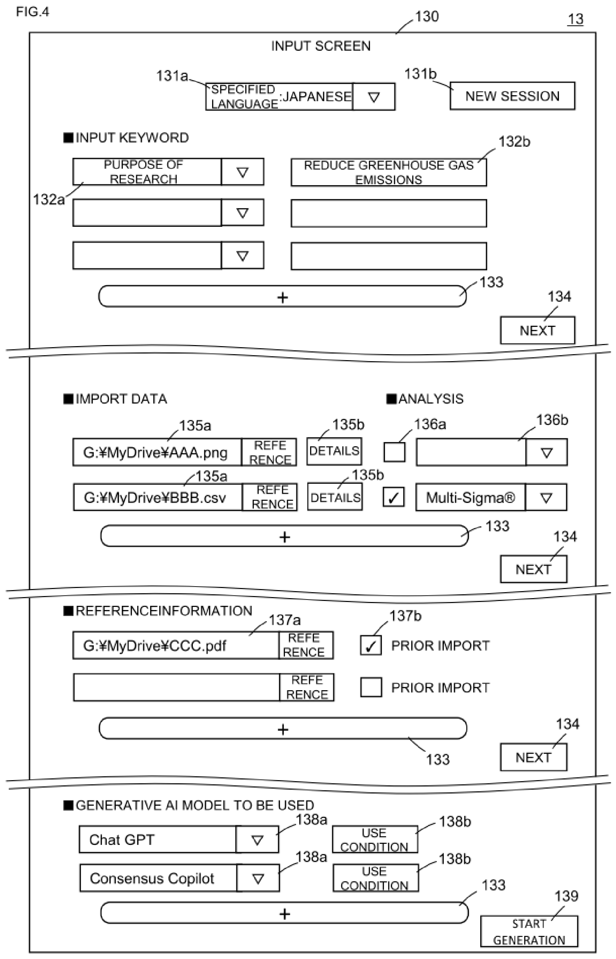

FIG. 4 shows an example of an input UI screen 130 according to the embodiment. The input UI screen 130 is displayed on the display unit of the output unit 13. The input UI screen 130 includes common items, a keyword input item, a reference information item, and a generative AI model selection item. The common items include a user-specified language menu 131a, a new session button 131b, an input field increase button 133, an item transition button 134, and a generation start button 139. The keyword input item includes keyword type selection menus 132a and keyword input areas 132b. A data import item includes import data reference source input areas 135a, import data detail input buttons 135b, analysis setting checkboxes 136a, and analysis application selection menus 136b. The reference information item includes reference information source input areas 137a, and prior import checkboxes 137b. The generative AI model selection item includes generative AI model selection menus 138a and use condition setting buttons 138b. The input UI screen 130 is only illustrative. As another example, an item-specific UI screen may be provided for each of the above items, or screen transitions may be made in any order.

The user U makes various inputs on the input UI screen 130 and then clicks the generation start button 139. Thus, document creation-related process steps (S2 onward) in the flowchart of FIG. 3 are performed.

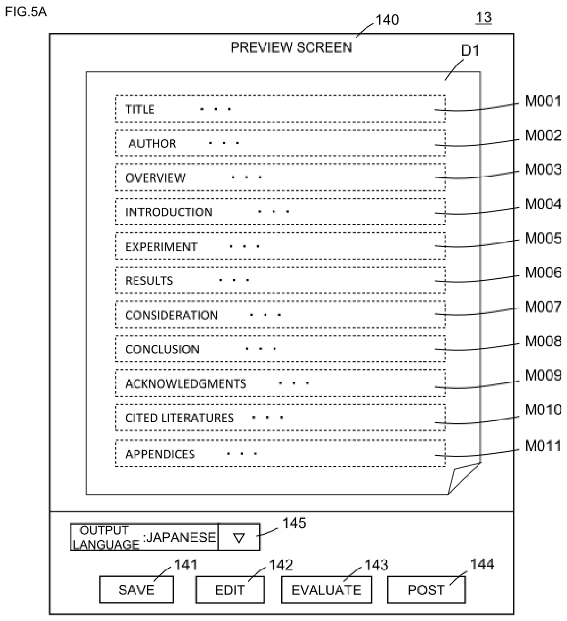

FIGS. 5A, 5B, 6A, 6B, and 7 show examples of UI screens in the steps (to be described later), and those UI screens are displayed on the display unit of the output section 13.

### 2-1-2. Table TB

In the embodiment, for example, a table TB is stored in the storage unit 11, as shown in FIG. 2A. In the embodiment, for example, records are assigned record IDs (M001 to M011, ...) in the table TB. In the embodiment, the record IDs are associated with headings in document data D1. The record IDs (M001 to M011, ...) are also referred to as "heading IDs". In the embodiment, the table TB includes, for example, at least the following columns (Hdₙ, INₙ, PrTₙ, Pₙ, Gₙ).
Heading string: Hdₙ (Hd_{M001}, Hd_{M002}, ...)
User input information: INₙ (IN_{M001}, IN_{M002}, ...)
Prompt template: PrTₙ (PrT_{M001}, PrT_{M002}, ...)
Prompt: Pₙ (P_{M001}, P_{M002}, ...)
Generated data: Gₙ (G_{M001}, G_{M002}, ...)

The table TB is used in internal steps such as the prompt creation step S3 and generation step S5 (to be described later). In each column (Hdₙ, INₙ, PrTₙ, Pₙ, Gₙ), subscript n serves as an identifier. By specifying any record ID, corresponding field data can be referred to.

The headings in the document data D1 (in the embodiment, a paper) are stored in the heading string column Hdₙ. In the embodiment, for example, the stored data is in the base language (e.g., English). For example, in the case of an academic paper, pieces of data in the heading string fields Hd_{M001}, Hd_{M002}, Hd_{M003}, Hd_{M004}, ... HdM₀₀₁₁ may be sequentially "Title," "Author Names," "Abstract," "Introduction," "Experiment," "Results," "Discussion," "Conclusion," "Acknowledgements," "References," and "Appendices." For example, data in the heading string field Hd_{M004} is "Introduction".

### 2-1-3. Base Language of Language Model

As described above, in the embodiment, each generative AI model server 2 includes, for example, a language model. In the embodiment, for example, the "base language" of the language model is utilized. The base language is a natural language to which the language model has been adapted through training. In the embodiment, the base language of each generative AI model server 2 is, for example, English. In the embodiment, for example, various methods are used to utilize the above "base language." For example, in the embodiment, pieces of string data are written mainly in the base language in the columns Hd_{n,} PrTₙ, Pₙ, and Gₙ of the table TB.

A more detailed description of the base language will be provided when an modification (third modification) and the like is described later; refer to the description as necessary. While, in the embodiment, for example, a large language model is used, a small language model may be used. Moreover, multiple tables TB (e.g., tables TB1, TB2, ...) may be provided. In this case, the content of a table TB1 may be written in the base language (e.g., English), and the same content may be mainly written in a non-base language (e.g., Japanese) in a table TB2.

### 2-1-4. Prompt Template

A "prompt template" has a standardized structure for making an instruction to a generative AI model. A prompt template includes a "variable part." Any information, such as a specific word, phrase, or sentence, can be inserted into the variable part. By embedding a specific word or phrase (variable part) in a prompt template, a prompt can be created.

In the embodiment, a "prompt template" is, for example, a string having any predetermined length. The prompt templates PrTₙ according to the embodiment may be any prompt templates as long as prompts can be created by combining them with user input information. For example, each prompt template PrTₙ may be one or more phrases, one or more sentences, one or more paragraphs, or text. In the embodiment, for example, the prompt templates PrTₙ are previously stored in the storage unit 11 and are read from the table TB through rule-based processing, each time as needed.

The prompt templates PrTₙ according to the embodiment are, for example, "base language prompt templates PrTₙ" that are previously created in the base language. In each base language prompt template, strings are written mainly in the base language. For example, all strings or at least the main string may be written in the base language, or characters or words in the base language may constitute a majority. The main string is, for example, a command statement for a generative AI model and/or a conditional statement that directly affects the accuracy or the like of a response from the generative AI model, or the like.

In the embodiment, for example, the heading strings Hdₙ in the document data D1 and the fields of the columns INₙ, PrTₙ, Pₙ, and Gₙ are associated with each other in the table TB.

### 2-2. Process Steps

Next, an example of specific details of the process steps in FIG. 3 will be described. When the process in FIG. 3 starts, the UI screen 130 is first displayed and put on standby.

The user U can pull down the user-specified language menu 131a of the UI screen 130 shown in FIG. 4 by operating the input unit 14 and select any user-specified language from among languages in the menu. In the embodiment, for example, Japanese is set as the user-specified language. Thus, for example, the display language on each UI screen and/or the language of the user input information INₙ are set to Japanese.

### 2-2-1. Session Management Step S1

In the process in FIG. 3, as an example of the embodiment, the information processing apparatus 1 first performs the session management step S1. In the session management step S1, the information processing apparatus 1 performs, for example, the following steps (d1) to (d3).

(d1) The information processing apparatus 1 performs a session change step when a predetermined condition is satisfied. Various conditions can be adopted as the predetermined condition. One example of the predetermined condition can be that the new session button 131b (see FIG. 4) is clicked. Another example can be that user accounts are previously provided for respective users and the session is automatically changed in response to the change of the user account (including that due to logout or the like).

(d2) In response to the change of the session, the information processing apparatus 1 deletes one or more of the user input information INₙ, prompts Pₙ, and generated data Gₙ in the current session. In the embodiment, for example, all of these are deleted. After the deletion, the next session is started. This provides an advantage that mixture of information is prevented to ensure accuracy, as well as an advantage that information confidentiality and the like are ensured.

(d3) In one session, the user input information INₙ, prompts Pₙ, and generated data Gₙ are held (e.g., stored in any memory for reuse). For example, the user input information INₙ, prompts P_{n,} or generated data Gₙ is reused in the prompt creation step S3, generation step S5, and document creation step S8 (to be described later).

The session management step S1 does not have to be performed unless the new session button 131b (see FIG. 4) is clicked. For example, if the same user logs in again without changing the session, the previous session and the current session may be handled as a series of sessions, or may be considered the same session.

### 2-2-2. Information Import Step S2

Then, in the embodiment, for example, the information processing apparatus 1 performs the information import step S2. In the information import step S2, the information processing apparatus 1 imports the "user input information INₙ". The user U inputs the user input information INₙ by operating the input unit 14. The inputted information is stored in the storage unit 11 of the information processing apparatus 1.

In the embodiment, for example, it is assumed that the user input information INₙ includes a "keyword" and "import data". First, a "keyword" will be described. The user U selects the type of a keyword to be inputted ("research purpose" in an example in FIG. 4) by operating a keyword type selection menu 132a and inputs a keyword to a corresponding keyword input area 132b. The term "keyword" here refers to a "string for conveying a key point", and there is no limit to the length of the string. The keyword inputted to the keyword input area 132b may be any word, phrase, or sentence.

Next, "import data" will be described. In the information import step S2, the information processing apparatus 1 imports, for example, "chart data" as user input information INₙ. The term "chart" here includes a drawing, a table (including a data list), a graph, a line drawing, and a photograph. There is no restriction on the format or the like of the chart data.

### 2-2-2-1. Translation Step SS1

In the embodiment, for example, the information processing apparatus 1 performs the translation step SS1. In the translation step SS1 according to the embodiment, for example, the information processing apparatus 1 performs translations using the generative AI model servers 2 so that "base language prompts Pₙ" are provided to the generative AI model servers 2 in the generation step S5. The "base language prompts Pₙ" are prompts obtained by writing prompts Pₙ mainly in the base language.

As a specific example, the information processing apparatus 1 converts user input information INₙ into the base language (e.g., English) in the translation step SS1. Thus, in the embodiment, the prompt creation step S3 and generation step S5 are allowed to be performed, for example, "on the basis of English". The term "on the basis of English" in the embodiment refers to "mainly written in English" or "English-dominant."

### 2-2-2-2. Result Data Acquisition Step S2a

Then, in the embodiment, for example, the information processing apparatus 1 perform the result data acquisition step S2a. In the embodiment, for example, experiment data (labeled "BBB.csv" in FIG. 4) is imported as an example of input data INA from the UI screen 130 in FIG. 4. An input form may be popped up in response to a click of a detail input button 135b, and supplementary information may be inputted as an example of input data INA to the input form. The supplementary information may be, for example, details of the imported experiment data or the like (e.g., an "experiment method", "experiment conditions", etc.).

In the result data acquisition step S2a according to the embodiment, the information processing apparatus 1 performs, for example, (a1) and (a2) below.

(a1) The information processing apparatus 1 acquires result data R1 by causing an analysis application 12c1 to perform analysis on the basis of the input data INA. The analysis may be performed on the basis of, for example, the input data INA "BBB.csv" in FIG. 4. The input data INA may be a part of information contained in the user input information INₙ.

(a2) The information processing apparatus 1 imports the result data R1 as the user input information INₙ.

The analysis application 12c1 may be, for example, an analysis application incorporating a neural network (NN) model. The analysis application 12c1 may import experiment data, an experiment method, and experiment conditions, and perform data analysis on the basis of the imported data. In the embodiment, Multi-Sigma^{®} is used as an example of the analysis application 12c1. The result data R1 may be a chart (such as a graph) and may also be any other type of data, such as text, strings, or numerical data. Any survey application, any evaluation application, any estimation application, or the like may be used in place of the analysis application 12c1.

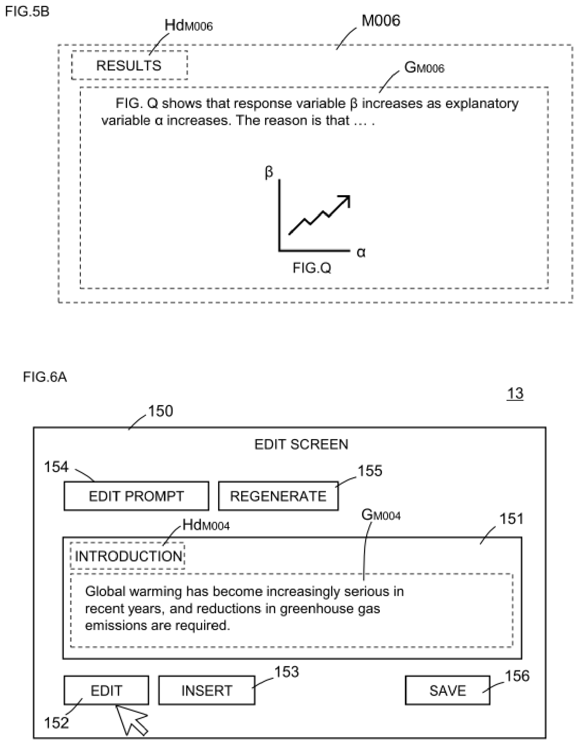

In the embodiment, for example, the result data R1 includes a chart. The chart may be assigned a chart number or the like in in the analysis application 12c1, or may be assigned a chart number or the like when imported as user input information INₙ. Referring to "FIG. Q" in FIG. 5B as an example, the description will be continued. For example, the result data R1 (FIG. Q) is imported as the value of a variable {FIG(X1)} in the user input information of a record M006 in the table TB (see FIG. 2A). The heading string Hd_{M006} of the record M006 is "Results". A prompt template PrT_{M006} is, for example, "Explain the results of {FIG(X1)}." By combining the prompt template PrT_{M006} with the result data R1 (e.g., FIG. Q), a prompt P_{M006} is generated. The prompt P_{M006} can be used to cause the generative AI model servers 2 to generate text describing the content of the result data R1.

### 2-2-3. Prompt Creation Step S3

Then, in the embodiment, for example, the information processing apparatus 1 performs the prompt creation step S3. In the prompt creation step S3, the control unit 12 creates prompts Pₙ on the basis of the user input information INₙ and prompt templates PrTₙ.

An example of the prompt creation step S3 will be described. For convenience's sake, a record M004 is used as an example. The heading string Hd_{M004} of the record M004 is, for example, "Introduction". A prompt template PrT_{M004} includes a variable {KW1}. It is assumed that a keyword corresponding to a keyword type "Research Purpose" is imported as the value of the variable {KW1}. The prompt templates PrTₙ are previously provided and stored in the table TB. The prompt template PrT_{M004} is, for example, "What is the social background of the need for {KW1}?"

In the embodiment, for example, "reduce greenhouse gas emissions" is inputted as a keyword related to "Purpose of Research" (see FIG. 4). In the embodiment, for example, the English translation of the keyword "reductions in greenhouse gases" is combined with the prompt template PrT_{M004} to generate a prompt P_{M004} corresponding to the heading M004. Specifically, the prompt P_{M004} is generated by substituting "{reduce greenhouse gas emissions}" for the variable {KW1} of the prompt template PrT_{M004}. In the embodiment, for example, a prompt Pₙ is created using such a mechanism. A prompt Pₙ does not have to be a string, and a chart or the like may be embedded in any form.

### 2-2-4. Reference Information Acquisition Step S4

Then, in the embodiment, for example, the information processing apparatus 1 performs the reference information acquisition step S4. In the reference information acquisition step S4, the information processing apparatus 1 may receive input of at least one piece of reference literature information Ref1. The reference literature information Ref1 may be, for example, information such as any paper, or information such as a literature in a field related to the document data D1 to be created. The reference literature information Ref1 may be electronic data itself of a literature, but is not limited thereto. It may also be literature identification information (e.g., in the case of an academic paper, the title, author, literature number, etc.) with which a literature can be retrieved. This is because, once literature identification information is obtained, the information processing apparatus 1 can acquire reference literature information data through the generative AI model servers 2 or another search engine. The reference literature information Ref1 can be used in the prior import step S5a (to be described later) and/or can be used in the generation step S5 using any method (e.g., as an attachment to the document data D1, a citation of any portion, etc.).

### 2-2-5. Generation Step S5

Then, in the embodiment, for example, the information processing apparatus 1 performs the generation step S5. In the generation step S5 according to the embodiment, for example, the information processing apparatus 1 includes the prior import step S5a as a sub-step.

### 2-2-5-1. Prior Import Step S5a

In the generation step S5 according to the embodiment, for example, the information processing apparatus 1 causes the generative AI model servers 2 to generate pieces of generated data Gₙ on the basis of the prompts Pₙ and the reference literature information Ref1. As an example of a mechanism to achieve this, the prior import step S5a is provided in the embodiment.

In the prior import step S5a according to the embodiment, for example, the information processing apparatus 1 allows the generative AI model servers 2 to read the reference literature information Ref1, without training the generative AI model servers 2. Specifically, in the prior import step S5a, the generative AI model servers 2 may cooperate with a RAG system server (not shown). For example, the reference literature information Ref1 may be imported into the database of the RAG system server. Or, for example, the information processing apparatus 1 may cause the generative AI model servers 2 to temporarily hold the reference literature information Ref1 so that the servers can read the information. As for this temporary holding, for example, the information processing apparatus 1 may send the reference literature information Ref1 to the generative AI model servers 2 so that the servers 2 can analyze the reference literature information Ref1 on an ad hoc basis, or may allow the generative AI model servers 2 to use information in the file of the reference literature information Ref1 as context. In the latter case, for example, in-context learning (ICT) may be used within the generative AI model servers 2. Thus, the generative AI model servers 2 are allowed to generate highly accurate responses with reference to the reference literature information Ref1.

### 2-2-5-2. Communication with Generative AI Model Servers 2

In the generation step S5 following the prior import step S5a, the information processing apparatus 1 causes the generative AI model servers 2 to generate pieces of generated data Gₙ on the basis of the prompts Pₙ. Specifically, for example, the information processing apparatus 1 provides the prompts Pₙ to the generative AI model servers 2 with reference to the table TB1 so that the servers generate responses, receives the responses, and stores them as generated data Gₙ.

First, the information processing apparatus 1 sends the prompts Pₙ to the generative AI model servers 2 through the API. In the generation step S5, the information processing apparatus 1 may send attached data (e.g., any user input information INₙ such as chart data, result data R1, etc.) along with the prompts Pₙ to the generative AI model servers 2 as necessary.

The information processing apparatus 1 acquire the responses from the generative AI model servers 2 through the API. The pieces of generated data Gₙ may be text, chart, text in which charts are embedded, or the like. The pieces of generated data Gₙ acquired are stored in the table TB. For example, generated data G_{M004} may be generated on the basis of the prompt P_{M004} and stored in the table TB.

### 2-2-5-3. Selective Use of Multiple Generative AI Models, etc.

In the embodiment, for example, in the generation step S5, the information processing apparatus 1 selectively uses the multiple generative AI model servers 2. More specifically, in the embodiment, for example, it selectively uses "ChatGPT" and "Consensus Copilot" in accordance with the situation.

In the embodiment, specific examples of a "method for determining a generative AI model" and a "method for selectively using generative AI models" will be described in relation to the selective use of the multiple generative AI models.

### 2-2-5-3-1. Method for Determining Generative AI Model

The method for determining a generative AI model server 2 to be used in the generation step S5 is not limited to a particular method. The generative AI model server 2 to be used may be "changeable" or a "fixed". If the generative AI model server 2 to be used is changeable, it may be manually changed or automatically changed. If the generative AI model server 2 to be used is "fixed", it may be always fixed or fixed in principle.

In the embodiment, for example, the generative AI model server 2 to be used is "manually changed". In this case, the user can specify the generative AI model server 2 to be used from a generative AI model selection menu 138a shown in FIG. 4. As another example, the generative AI model server 2 to be used may be "fixed". In this case, multiple generative AI models may be previously set, and the user may be prohibited from changing the set generative AI models. As another example, the generative AI model server 2 to be used may be "automatically changed". Specifically, for example, a process of automatically determining or setting an optimal or preferred generative AI model or a process of presenting candidates may be performed in accordance with the type, content, or the like of the document. If the generative AI model server 2 to be used is not manually changed, the generative AI model selection menus 138a may be omitted.

Examples of a large language model usable in the generation step S5 include various types of generative AI models (GPT (Generative Pretrained Transformer)-3^{®}, GPT-4^{®}, ChatGPT, etc.) available from the OpenAI.

As another example, a generative AI model specialized for a specific field, specific purpose, or the like may be used. For example, if document data D1 is an academic paper, a generative AI model specialized in academic papers may be used. For example, a generative AI model based on an academic paper AI search model is configured to identify an academic paper corresponding to a search keyword or the like and to extract a response to a query from the identified paper. Such an generative AI model is also advantageous in that cited literatures presented along with the response are accurate, and an example thereof is "Consensus Copilot" described in the embodiment.

Another model useable as generative AI model servers 2 will be described later in a modification (third modification).

### 2-2-5-3-2. Method for Selectively Using Generative AI Models

The method for selectively using generative AI model servers 2 is not limited to a particular method. The selective use method may be "specified" or "fixed". If the selective use method is specified, it may be specified manually or automatically. If the selective use method is "fixed", it may be always fixed or fixed in principle. Various selective use methods are conceivable, and examples thereof include the following (Y1) and (Y2):
(Y1) units into which document data D1 is divided; and
(Y2) a method for determining a selective use condition.

First, (Y1) units into which document data D1 is divided will be described. A piece of document data can be divided into multiple portions on the basis of any criterion. A piece of document data can be arbitrarily divided in accordance with positions in text and/or the semantic content of the text. Generative AI models can be selectively used for the respective divided portions. For example, different generative AI model servers 2 may be selectively used for the respective generation steps S5 of the description items of the document data D1 (e.g., for the prompts P_{M001} to P_{M011}). As another example, generative AI model servers 2 may be selectively used in accordance with the type of information, such as text, drawing, or numerical data. The user may specify generative AI model servers 2.

Next, (Y2) the method for determining the selective use condition will be described. For example, the selective use condition may be specified by the user. As a specific example, in the embodiment, the user may set a condition for selectively using generative AI model servers 2 by clicking a use condition setting button 138b (see FIG. 4) adjacent to a generative AI model selection menu 138a. As another example, the condition for selectively using multiple generative AI model servers 2 may be fixed to a previously set condition in principle. As another example, a process of automatically determining or setting an optimal or preferred selective use condition or a process of presenting candidates may be performed.

Referring to FIG. 4, in the embodiment, for example, when a use condition setting button 138b is clicked, a pop-up screen or the like may be presented so that checkboxes associated with the headings (specifically, the heading strings Hdₙ in the table TB) are presented. In this case, by checking the checkboxes, the user can specify which heading's body text should be generated by which generative AI model. While the generative AI model servers 2 use large language models to create text, this is not limiting. The generative AI model servers 2 may also use other generative AI models (e.g., image generation models, etc.) along with large language models.

Note that if the number of generative AI models specified by the user in FIG. 4 is one, the generation step S5 may be completed by the single generative AI model. In this case, the above selective use is not performed.

### 2-2-6. Loop Determination Process S6

In the embodiment, for example, the information processing apparatus 1 is configured to repeat the prompt creation step S3 and the generation step S5.

In a loop determination process S6 according to the embodiment, for example, whether the generation step S5 is complete is determined for all previously provided text blocks. The term "text block" refers to one text area in the document data D1. Specific examples of one text area include a paragraph, a section (chapter), a subsection, and the like. Text blocks corresponding to the headings (Hd_{M001} to Hd_{M011}) are prepared. In the embodiment, for example, pieces of generated data G_{M001} to G_{M011} in the table TB are inserted into the text blocks. If all pieces of required generated data Gₙ are provided, YES is determined in the process step S6; if not, NO is determined in the process step S6.

### 2-2-7. Block Transition Process S7

If NO is determined in the loop determination process S6, the process proceeds to a block transition process S7. In the block transition process S7, the target text block (heading) makes a transition to the next text block (heading). In the embodiment, for example, the order in which pieces of generated data Gₙ are generated is previously set in accordance with the relationships between the heading strings Hdₙ. Specifically, the order in which the text blocks corresponding to the records M001 to M011 are processed is previously set, and prompt creation steps S3 corresponding to the text blocks are performed in the this order. That is, the order in which the text blocks are processed is not necessarily limited to the ascending or descending order of the record IDs but is previously set to an appropriate order corresponding to the type or the like of the document.

In the prompt creation step S3 according to the embodiment, for example, the information processing apparatus 1 uses the generated data Gₙ already generated in the past generation step S5 to create a prompt. The "generated data already generated" may be, for example, generated data Gₙ obtained in another process step when creating the same document, or generated data Gₙ obtained when creating another document in the same session.

An example of the document data D1 will be described on the basis of the table TB (see FIG. 2A). In the embodiment, for example, the document data D1 includes a first heading (e.g., Hd_{M006} and a second heading (e.g., Hd_{M007}). The first and second headings are placed at different positions in the document data D1. For example, it is assumed that a value {G_{M006}} is set as the user input information IN_{M007} of a record M007 in the table TB. The value {G_{M006}} is an instruction to import the generated data G_{M006} of the heading M006.

In the prompt creation step S3 according to the embodiment, for example, the information processing apparatus 1 performs (x1) and (x2) below.

(x1) The information processing apparatus 1 imports at least a part of generated data Gₙ generated in the generation step S5 for the first heading, as user input information INₙ for the second heading. As a specific example, the string of the generated data _{GM006} of the first heading Hd_{M006} may be imported as user input information IN_{M007} for the second heading Hd_{M007}.

(x2) The information processing apparatus 1 combines the user input information INₙ (e.g., IN_{M007}) imported in the above (x1) with a prompt template PrTₙ(e.g., PrT_{M007}) associated with the second heading (e.g., Hd_{M007}). Thus, a prompt Pₙ (e.g., P_{M007}) is generated. The exemplified prompt P_{M007} is a prompt for obtaining generated data G_{M007} of the second heading Hd_{M007}.

As seen above, the generated data Gₙ generated in the past (i.e., the string of the generated data G_{M006}) can be recursively used to create the prompt for the heading M007.

Although the description is omitted for convenience's sake in the embodiment, prompt templates PrTₙ and the like are previously stored also in other records in the table TB. The fields of the user input information INₙ of some records may contain some or all of the generated data Gₙ of other records. Thus, the prompt creation step S3 and generation step S5 can be performed over multiple different blocks (specifically, multiple heading areas) in the document data D1 in an automated and chained manner.

By repeating the process loop consisting of the process steps S3, S5, S6, and S7, pieces of generated data G_{M001} to G_{M011} are successively generated. In the end, all pieces of required generated data Gₙ are provided. In the embodiment, for example, YES is determined at this point of the process step S7, and the process exits the process loop and proceeds to the document creation step S8. Note that the above looped steps may be performed by the standard processing functions of the control unit 12 and that the loop determination process S6 or block transition process S7 is not shown in the function block diagram of FIG. 2B.

### 2-2-8. Document Creation Step S8

Then, in the embodiment, for example, the information processing apparatus 1 performs the document creation step S8. In the document creation step S8, the information processing apparatus 1 creates document data D1 on the basis of the pieces of generated data Gₙ. In the document creation step S8 according to the embodiment, for example, the information processing apparatus 1 places the pieces of generated data Gₙ at positions corresponding to the headings in the document data D1 in accordance with previously set correspondences. In the embodiment, for example, the positions of the heading strings Hdₙ are predetermined on the basis of the type or content of the document data D1 (see FIG. 5A). As shown in FIG. 5B, the pieces of generated data Gₙ are inserted into the positions corresponding to the heading strings Hdₙ. For example, in a horizontal document, the corresponding positions are located on the lower side, right side, or the like; in a vertical document, they are located on the left side or the like.

In the document creation step S8, a UI screen 140 (preview screen) illustrated in FIG. 5A is presented. This allows the user U to visually recognize the content of the document data D1. As illustrated in FIG. 5A, positions corresponding to the records M001 to M011 are previously set in the document data D1. The contents of the pieces of generated data Gₙ (the strings of the pieces of generated data G_{M001} to G_{M011}) are inserted into the positions corresponding to the records M001 to M011. FIG. 5B illustrates the description of the record M006 (Result). By clicking a save button 141, the document data D1 can be downloaded. The order of the positions corresponding to the records M001 to M011 may be a preset fixed order, or may be arbitrarily changed by the user U.

In the embodiment, for example, an output language specification menu 145 is provided on the preview UI screen 140. By operating the output language specification menu 145, the user can specify any language (e.g., Japanese) as the output language of the document data D1 (e.g., the language for presentation, saving, sending, or printing).

It should be noted that, in the embodiment, for example, the document creation step S8 includes a translation step SS1. In the translation step SS1, the strings of the pieces of generated data G_{M001} to G_{M011} in the table TB are translated into the user-specified output language (e.g., Japanese), and the translation results are inserted into the corresponding positions in the document data D1.

### 2-2-9. Operation Reception Step S9

Then, the information processing apparatus 1 according to the embodiment performs, for example, the operation reception step S9. In the operation reception step S9, the information processing apparatus 1 receives an edit operation on the document data D1, generated data Gₙ, or prompts Pₙ by the user.

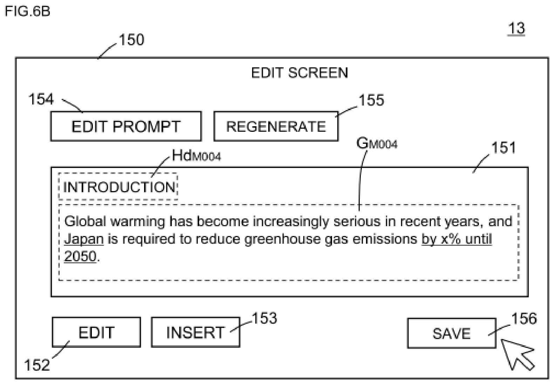

When an edit button 142 is clicked on the preview UI screen 140 illustrated in FIG. 5A, the screen enters edit mode. When any heading area (e.g., the M004 area) in the document data D1 is clicked in edit mode, the screen makes a transition to an edit UI screen 150 illustrated in FIG. 6A. Thus, the heading M004 "Introduction" is allowed to be edited. When an edit button 152 is further clicked in FIG. 6A, text in a display area 151 is allowed to be edited. FIG. 6B shows an example of the edited text into which an underlined portion "Japan is required to ..." has been inserted. When a save button 156 is clicked, the document data D1 with the edited content is updated.

When an insert button 153 is clicked on the edit UI screen 150 in FIG. 6A, one or more pieces of user-saved text previously saved by the user U are presented as insertion candidates. Thus, the user-saved text is allowed to be inserted into any position in the display area 151. When a prompt edit button 154 is clicked, the prompt Pₙ used to generate the currently displayed generated data Gₙ is popped-up and the user U is allowed to edit and save the popped-up prompt Pₙ. When a regenerate button 155 is clicked, the generation step S5 is performed again on the basis of the edited prompt Pₙ. The display area 151 may be updated with generated data Gₙ obtained as a result of the regeneration.

As seen above, in the document creation step S8 according to the embodiment, the information processing apparatus 1 creates the document data D1 on the basis of the generated data Gₙ and user edit operation. The user edit operation may be any edit operation on the content of the generated data Gₙ, such as addition, deletion, change, combination with other generated data Gₙ, or addition of previously prepared user saved text.

It should be noted that, in the embodiment, for example, the operation reception step S9 includes a translation step SS1. In the translation step SS1, the strings of the generated data G_{M001} to G_{M011} in the table TB may be translated into a user-specified language (e.g., Japanese), and the translation results may be displayed in the display area 151. The edited content illustrated in FIG. 6B may be translated into the base language (e.g., English) in the translation step SS1 and then re-stored in the table TB.

### 2-2-10. Evaluation Step S10

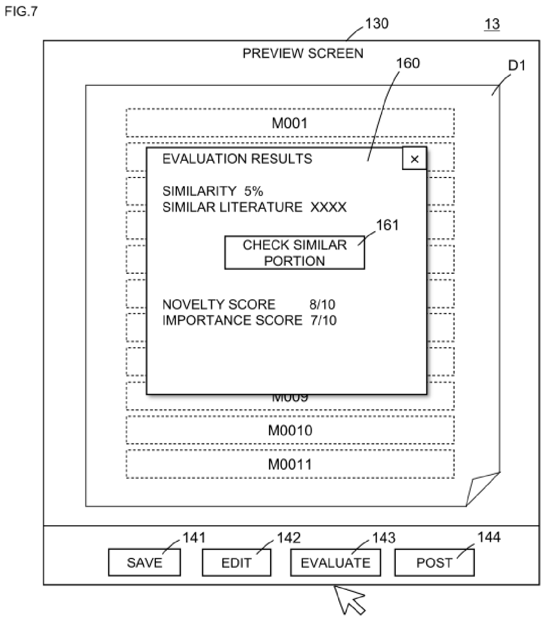

Then, the information processing apparatus 1 according to the embodiment performs, for example, the evaluation step S10. When the evaluation button 143 is clicked on the UI screen 140 illustrated in FIG. 5A, a pop-up UI screen 160 illustrated in FIG. 7 is displayed. In the evaluation step S10 according to the embodiment, for example, the information processing apparatus 1 presents evaluations of the document data D1 on the pop-up UI screen 160. In a translation step SS1, a necessary translation may be performed in accordance with an evaluation item (e.g., a comparison may be made between documents in different natural languages).

The evaluations presented in the evaluation step S10 according to the embodiment may include, for example, at least one of the following (b1) to (b3):
(b1) the similarity between the content of other documents and the content of the document data D1;
(b2) the novelty score of the content of the document data D1; and
(b3) the importance score of the content of the document data D1.

Moreover, in the evaluation step S10 according to the embodiment, the following (b11) to (b13) may be presented as a specific example specialized in papers to a greater extent:
(b11) presentation of similar portions when the evaluations include the above (b1);
(b12) the novelty evaluations of the description of a method and the description of a result when the evaluations include the above (b2) and the document data D1 is a paper; and
(b13) the social significance (e.g., the degree of technical contribution, technical progress, or technical improvement, etc.) based on the description of an introduction and/or the description of a result when the evaluations include the above (b3) and the document data D1 is a paper.

The "similarity" is related to the above (b1) and (b11) and can be obtained, for example, through any comparison process in which comparisons are made between the similarities between multiple pieces of document data. For example, a sentence-level comparison, a paragraph-level comparison, a section-level comparison, or an overall comparison may be made between the document data D1 and any other document data (e.g., the reference literature information Ref1, etc.). Any large language model, any natural language machine learning model, or any rule-based document comparison program may be used as a document comparison tool. For example, the percentage (%) of the similarity may be presented on the basis of the amount of sentences determined to be the same, substantially the same, or similar. With respect to "presentation of similar portions", the document data D1 may be compared with any other document data, for example, at the sentence level or at the paragraph level. The similarity evaluation is also advantageous in that plagiarism can be checked.

In the embodiment, for example, when a check button 161 is clicked on the pop-up UI screen 160 in FIG. 7, the screen makes a transition to another UI screen. On the other UI screen, sentences or the like determined to be similar may be, for example, highlighted, or displayed so as to be compared in two columns. While the example in FIG. 7 shows a result of "one similar literature (XXXXX) with 5% similarity", this is only illustrative. Multiple similar literatures may be presented, and the degree of similarity of each similar literature may be presented.

The novelty score is related to the above (b2) and (b12). For example, if a specific portion of a piece of document data is not described in any of other pieces of document data, the specific portion may be given a high novelty score. In particular, the above (b12) means that weight is put on the evaluations of the descriptions of the "method" and "result". For example, if a literature including the same method and the same result is found through a search, the novelty score of the literature may be presented as zero or a sufficiently low score. Novelty scores may be calculated, for example, as summarized in a table below.

**[Table 1]**

| Method | Results | Novelty |
|---|---|---|
| Same | Same | Zero or low score (Examples 1-3) |
| Same | Different | Medium score (Examples 4-7) |
| Different | Same | Medium score (Examples 4-7) |
| Different | Different | High score (Examples 8-10) |

The "importance score" is related to the above (b3) and (b13) and may be presented on the basis of, for example, words, sentences, paragraphs, context, or the like in the document data D1. For example, the "importance score" may be calculated taking into account the description, particularly in the "introduction" and/or "results", in the document data D1. For example, if what will contribute to society is explicitly stated in the "introduction" of the document data D1 or it is stated that its contribution level is higher than conventional levels, a higher importance score may be presented. For example, the contribution level may be quantitatively evaluated on the basis of the "results". If a description such as "the reduction rate of energy consumption or the like is very high (several tens of percent or more)" or "an automobile has a high fuel efficiency," is contained in the "results" field, a higher importance score may be presented. The importance score of the entire document data D1 may be calculated taking into account the importance scores of the descriptions in both the "introduction" and the "results".

### 2-2-11. Posting Step S11

Then, the information processing apparatus 1 according to the embodiment performs, for example, the posting step S11. When a post button 144 is clicked on the preview UI screen 140 illustrated in FIG. 5A with one or more output languages specified in the output language specification menu 145, the posting step S11 is performed. In the posting step S11, the information processing apparatus 1 sends the document data D1 in the one or more specified output language versions to one or more document publishing system servers 3. The document publishing system server(s) 3 may be arbitrarily specified by the user U or may be previously set. Thus, the document data D1 can be published in any language version. The input language specified by the user (see the user-specified language menu 131a in FIG. 4) may be automatically set, temporarily set, or suggested as the output language.

Then, the current routine ends. The user U may recreate the same document data D1 in the same session, or may create new document data D1 after the session is changed, or may log out. The embodiment described above is able to effectively assist in creating a document by utilizing the generative AI models.

### 3. Modifications and Others

The description of the embodiment is only illustrative, and various modifications can be made thereto. For example, any one of modifications described below may be used, or multiple modifications may be used in combination.

### 3-1. First Modification (User Input Information, etc.)

Various types of information may be used as user input information INₙ. For example, when user input information INₙ is character information, there is no limit to the length of the string, and the like. Examples of usable character information include any characters, numbers, symbols or terms, any keywords, any phrases, any sentences, any paragraphs, any text, any one or more literatures, documents, any books, and the like. For another example, user input information INₙ may include any chart data, analysis data, or any other type of data. Examples of the other type of data include a 3D model, 3D point cloud data, big data, and multimedia data (e.g., video, audio, etc.). If the generated AI models cannot directly import the data of the user input information INₙ, they may collaborate with large language models by utilizing preprocessing or multimodal AI technology. A combination of two or more of the examples described above may be imported as user input information INₙ.

### 3-2. Second Modification (Regressive Use of Generated Data Gₙ, etc.)

In the information import step S2, some or all of the pieces of generated data Gₙ outputted by the generative AI model servers 2 in the past process steps may be automatically inputted, suggested for input assistance, or presented as selection candidates in the keyword input field. This is advantageous in that work efficiency can be improved, for example, when the same user reuses the same experiment data or the like to create a paper on the same or similar theme.

### 3-3. Third Modification (Language Support, Translation Step, etc.)

### 3-3-1. Details of Base Language

The base language will be described in more detail. As described above, the base language is a natural language to which the language model has been adapted through training. Natural languages differ from each other in words, the grammatical structure, the word order, or the like. It is considered that if language models are trained using pieces of training data mainly including different natural languages, respectively, that is, are trained in a different manner, the language models are adapted to the different natural languages, respectively. The term "adapted" means that the internal parameters or the like of a language model is optimized or specialized for a specific language through training (pre-training or post-training).

As a specific example, nodes in each layer of a language model including a neural network (NN) include internal parameters such as weight and bias. These parameters are adjusted through training. Recent many generative large language models (e.g., GPT) are based on a transformer architecture and include multiple NNs. If a generative large language model is trained using pre-training data mainly using a different natural language, the adjustment of the parameters of its NNs produces different results.

Considering this point, the base language may be defined by one or more of (Lb1) to (Lb4) below.

### 3-3-1-1. (Lb1) Pre-training Data

When pre-training data used to train the language model (each generative AI model server 2) is mainly based on a specific natural language, this specific natural language may be considered the base language. For example, when "mainly" means the proportion, the majority (largest group) natural language in training data containing content in multiple natural languages is a "specific natural language on which the training data is mainly based." For example, when training data consists of 40% English, 20% Japanese, 20% German, and 20% Chinese, the majority is English and therefore English may be considered the base language. When defining the proportion of a natural language in training data or the like using the term "mainly," the definitions based on the various specific numerical ranges described at the beginning of the embodiment may be used.

### 3-3-1-2. (Lb2) Tuning

When the tuning of the language model (each generative AI model server 2) is mainly based on a specific natural language, this specific natural language may be considered the base language. Specific examples include a case in which the language used when performing adjustment (tuning or fine-tuning) after training is biased toward a specific natural language, and the like. Additional post-training by fine-tuning may also be mainly based on a specific natural language. The definitions based on the proportion are similar to those for the above (Lb1) pre-training data.

### 3-3-1-3. (Lb3) Benchmark Score

The benchmark score of the language model (each generative AI model server 2) in the base language is higher than those in other natural languages. By making comparisons between different languages in a benchmark test, the language to which the language model is adapted can be identified post-hoc. More preferably, the base language is a natural language having the highest overall benchmark score and/or having the highest benchmark score particularly related to the response accuracy or response speed.

### 3-3-1-4. (Lb4) High-Resource Language

When the generative AI model servers 2 (language models) are trained using data on the internet, a high-resource language on the internet may be considered the base language. Examples of the high-resource language include English, Russian, German, Spanish, French, Japanese, Portuguese, Italian, Persian, Polish, Chinese, and the like. The base language may be one natural language selected from these high-resource languages.

The base language may be one natural language selected from the group consisting of English, Japanese, French, German, Spanish, Chinese, and Korean. Which natural language serves as the base language is influenced by imbalances (in language user population, economic scale, international influence, the level of academic research activity, etc.) in training data, the nationality of the language model development company and its official language, and the like. Currently, English information takes the main proportion of the Internet content, and academic papers and the like are mainly English papers. On the other hand, information in Japanese and the like listed above is dominant as non-English candidates .

Preferably, the base language of the language model is a natural language to which the language model has been adapted to the greatest extent through training. A natural language that matches the definitions (Lb1) to (Lb4) above to the greatest extent may be considered the base language.

### 3-3-2. Specific Examples of Related Steps

Next, specific examples of language-related steps will be described. For example, the following (L1a) and/or (L1b) can be adopted and have already been adopted in the embodiment:
(L1a) the prompt templates PrTₙ may be previously created mainly in the base language; and
(L1b) in the translation step SS1, the generated data Gₙ may be translated so that the document data D1 can be outputted in one or more user-specified languages (see the menu 145 in FIG. 5A).

While, in the embodiment, for example, any internal step is performed on the basis of English, this is not limiting. As another example, when the base language is any non-English language, various steps may be performed on the basis of the non-English language. For language support, for example, any number of tables TB may be prepared, and the heading strings Hdₙ, prompt templates PrTₙ, and the like in different languages may be stored in the respective tables.

As specific examples, the base language of the following large language models is considered English: the GPT series of OpenAI (i.e., GPT-3^{®}, GPT-4^{®}, ChatGPT, etc.), LLaMA^{®}, Claude, PaLM^{®}, Grok, Microsoft Copilot, and Consensus Copilot. Language models whose base language is English are optimized or specialized for English. For example, the base language of tsuzumi, Fugaku-LLM, and the like is considered Japanese. For example, the base language of ERNIE and the like is considered Chinese.

The translation step SS1 may be performed by any means, and various known translation applications can be used. As a modification, translations may be performed by communicating with a translation server for neural machine translation (NMT: a machine translation engine using neural networks). As another example, rule-based machine translation (RBMT) or statistical machine translation (SMT) may be used alone or as auxiliary means. A lookup-type translation engine or dictionary-based translation system may also be used alone or as auxiliary means and may be used mainly for, for example, word-level, keyword-level, or phrase-level translation. The translation step SS1 may be performed by sending specification of the target language, text to be translated, and the like to any translation engine server.

To enhance a "multilingual support function," for example, not only Japanese but also any one or more non-English languages may be supported in the translation step SS1. In the embodiment, the user-specified language may be changed in any process step in the flowchart of FIG. 3. Moreover, for the translation step SS1, any user-specified language may be specified at any point of a process step such as the document creation step S8.

It should be noted that in the embodiment, for example, the prompt creation step S3 and the generation step S5 proceed in the base language (specifically, English) in a chained manner.

In the embodiment, for example, the table TB based on the base language and the translation step SS1 are adopted. In the embodiment, sentences and the like are described in accordance with the grammatical structure, the word order, and the like of the base language, and the proportion of words in the base language is high. In the embodiment, for example, even if words or the like in a non-base language are included, elements determining the content of the prompts Pₙ are strings in the base language, and/or the main portion (e.g., a string such as a topic sentence) of, for example, each generated data Gₙ is in the base language.

In the embodiment, the translation step SS1 is adopted, and various types of text and the like are presented in the user-specified language on the user interface. The document creation-related steps (particularly, data communication with the generative AI model servers 2) may be steps consistently based on the base language. This is advantageous in that accuracy and the like can be ensured through the steps in the base language, as well as in that the convenience and work efficiency of the user U can also be ensured.

### 3-3-4. Omission of Translation Step

The required information accuracy or the like may vary depending on the type or the like of the document data D1. If the information accuracy is sufficient to meet the user's needs, a translation to the base language may be unnecessary. In this case, the translation step SS1 may be omitted while adopting any large language model.

### 3-3-5. Summary

The language support according to the embodiment can be summarized in, for example, a table below. To perform a necessary translation between languages below in the translation step SS1 according to the embodiment, the base language and a non-base language (e.g., the user-specified language, etc.) are appropriately set as the translation source/target languages.

**[Table 2]**

| | Input language | Base language | Output language |
|---|---|---|---|
| Overview | Used when making inscriptions on UI screen and/or when user inputs strings | It is preferable to mainly use base language for purposes such as exchange of prompt, etc. with language model | Used to output (present, save, send, post, print, etc.) document data D1 |
| Language example | Any natural language (English or non-English) Multiple languages can be used simultaneously | English (Chat GPT, etc.) | Any natural language (English or non-English) |
| | | Japanese (tsuzumi, etc.) | |
| | | | Multiple languages can be used simultaneously |
| | | Others (base language for each language model) | |
| Data example | User input information INₙ | Heading string Hdₙ | Document data D1 |
| | | Prompt template PrTₙ | |
| | | Prompt Pₙ | |
| | | Generated data Gₙ | |
| Whether user can specify | Possible (see user-specified language menu 131a in FIG. 4) | Impossible in principle (determined for each language model) | Possible (see output language specification menu 145 in FIG. 5A) |

### 3-4. Fourth Modification (Prior Import Step)

In the prior import step S5a, various techniques to allow the generative AI model servers 2 to refer to various types of information on the basis of the reference literature information Ref1 may be used. As a modification, the generative AI model servers 2 may be trained using the reference literature information Ref1 as training data. As one modification, when generative AI models that can be pre-trained are provided, the prior import step S5a may be configured such that the generative AI models are "pre-trained". The pre-training may be fine-tuning, additional training, or re-training.

### 3-5. Fifth Modification (Utilization of Multiple Generative AI Models, etc.)

In the embodiment, for example, the multiple generative AI model servers 2 are used selectively or in combination. In the case of "selective use", the multiple generative AI model servers 2 may be selectively used in different scenes or situations, for example, in the same session (see the generation step S5).

On the other hand, "use in combination" may be adopted as another example. In the case of "use in combination," the multiple generative AI model servers 2 may each provide a response to a single prompt Pₙ, for example, in the same session. By combining these responses directly or after processing them, combined generated data may be generated. One of the multiple models may be mainly used, and the others may be used as sub-models.

When using "selective use" or "use in combination", the multiple generative AI models to be used may be, for example, any one of the following (e1) to (e6):
(e1) the generative AI models are in the same series but in different versions;
(e2) at least part of the training data varies among the generative AI models;
(e3) the generative AI models are of different types. For example, a text generation AI model and an image generation AI model or the like can be used in combination or selectively;
(e4) the post-training tuning varies among the generative AI models;
(e5) the generative AI models are those from different providers. Generally, generative AI models from different providers differ in training data or the like and therefore can generate different responses; and
(e6) the generative AI models are multiple generative AI models having different databases in a RAG system. Generative AI models having different databases, i.e., different external resources can generate different responses.

Among representative generative AI model servers 2 are large language models. Large language models having the same model architecture but having different training data or the like output different generated data Gₙ. Note that the above (e1) to (e6) are not mutually exclusive and may overlap each other.

As another example, the following (e7) or (e8) may be adopted:
(e7) in a generative AI multi-agent system, a generative AI model used by a first agent and a generative AI model used by a second agent can be used in combination or selectively; or
(e8) role-playing agents (characters) in the same generative AI model instructed to behave as different agents can be used in combination or selectively.

Multiple generative AI models or the like may be selectably set in each generative AI model selection menu 138a. Communication settings, such as AP, may be changed in accordance with specification of generative AI models or the like. Note that the above fifth modification is only illustrative and, as another modification, a single generative AI model alone may be used.

### 3-6. Sixth Modification (Position of Operation Reception Step)

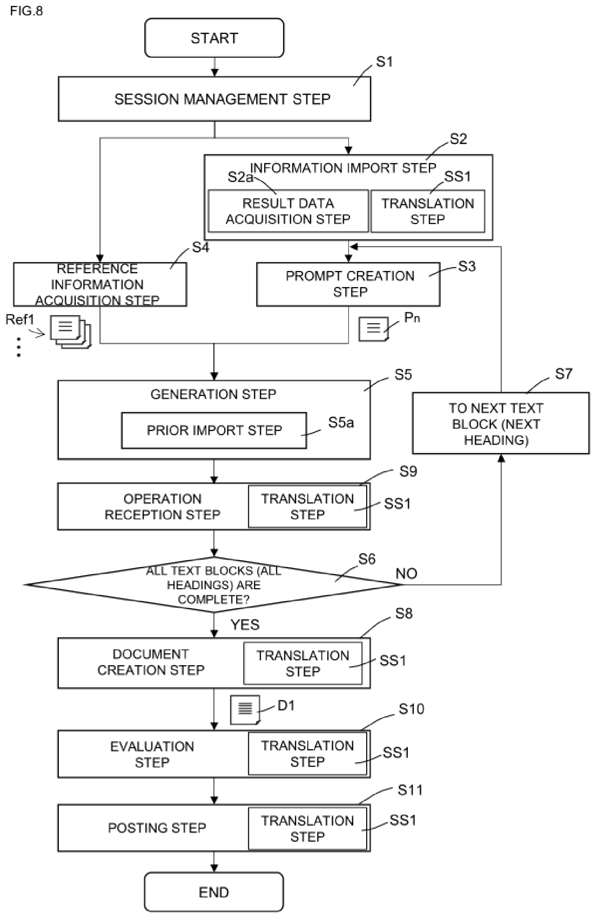

The position of the operation reception step S9 is not limited to the process step position in FIG. 3. As one modification, the operation reception step S9 may be located between the generation step S5 and the loop determination process S6, as shown in FIG. 8. In this case, each time generated data Gₙ is acquired, the user U can be urged to confirm or edit the generated data Gₙ. The confirmed or edited generated data Gₙ is reused in the prompt creation step S3 for the next text block (heading). This is advantageous in that the intent of the user U can be reflected on the generated data Gₙ from the initial stage.

### 3-7. Seventh Modification (Type of Document Data, etc.)

Document data D1 that the embodiment can assist in create is not limited to particular document data. Examples of documents for which the embodiment can be suitably used include papers (specifically, academic papers or research papers), published technical reports, patent specifications, any technical documents, various reports, and the like. Other examples include textbooks, books, pamphlets, manuals, specifications, Q&A sheets, contracts, and the like. The reference literature information Ref1 is preferably related to document data D1 to be created.

Document creation assistance according to the embodiment is not limited to a particular field, specialized area, or the like. Document data D1 may belong to any of fields such as natural sciences, medical sciences (medicine, dentistry, pharmacy), and humanities and social sciences. For example, the embodiment may be used to create documents in biology, physics, engineering, agriculture, biotechnology, computer and information science, medical sciences, pharmacy, education, psychology, earth sciences, and the like. An example of documents for which the embodiment can be suitably used is a "document that has a specified theme and whose headings and order are standardized to some extent." The embodiment is also suitable to analyze any data (such as experiment data, statistical data, simulation data, etc.) and to create a related document, or to create a document including explanation of chart data or the like.

The seventh modification may be combined with the fifth modification. In this case, multiple different generative AI models may be used selectively or in combination in accordance with the type, field, or the like of a document that the user wants to create. When using area-specific generative AI models, generative AI models corresponding to respective areas of expertise may be used selectively or in combination. When creating an interdisciplinary research paper, multiple generative AI models specialized in respective fields may be used selectively or in combination.

### 3-8. Eighth Modification (Description of Reference Literature List, etc.)

As a modification, reference literatures for each output result may be described together at any position (e.g., at the end) of the document data D1 in a predetermined format. In the embodiment, the record M010 corresponds to "References". For this reason, information on reference literatures or cited literatures may be inserted and placed together in the generated data G_{M010}. For a paper, the predetermined format may be, for example, "number) author name, journal abbreviation, volume (bold), starting page or paper number--page (publication year).", or may be a format using any one or more of the items of this example. For example, in the document creation step S8, literature information contained in the document data D1 may be extracted. As another example, in the prompt creation step S3, an "information source presentation instruction" may be added to a prompt Pₙ. The information source presentation instruction requests presentation of reference literatures, cited literatures, website URLs, and the like related to a response. The addition of the information source presentation instruction may be performed uniformly or selectively. If generated data Gₙ contains information on reference literatures or the like, the literature information may be extracted in the document creation step S8. The eighth modification is more effective when combined with a high-precision generative AI model in the field of academic papers, such as "Consensus GPT".

### 3-9. Ninth Modification (Prompt Template, etc.)

While, in the embodiment, the table TB is used to handle the prompt templates PrTₙ and the like, this is only illustrative. Not only the table but also any other data format and processing format may be used. While, in the embodiment, storage, management, and the like of the prompt templates PrTₙ and the like are performed for the respective headings (the records M001 to M011), this is not limiting. The storage, management, and the like of the prompt templates PrTₙ and the like may be performed for any units different from the headings.

The prompt templates PrTₙ are not limited to those whose content is previously fixed in a format such as a table. As another example, the prompt templates PrTₙ may be dynamically created (generated) or customized using any prompt generator or the like. For example, "prompts for generating prompt templates" may be provided to a prompt generator, and such a prompt may be, for example, "Generate a prompt template to write text following a 'heading' on the basis of a 'keyword'". In this case, any keyword (i.e., "user input information") and any heading (e.g., "Introduction") serve as variable portions in a prompt for generating a prompt template.

### 3-10. Others

In the embodiment, any one or more of the function blocks (12a to 12m) in FIG. 2B and the steps (S1 to S11, and SS1) in FIG. 3 and the like may be omitted. The flowcharts according to the embodiment (see FIG. 3 or FIG. 8) are only illustrative; the order of the steps except for steps whose context is necessarily determined may be arbitrarily changed.

For example, one of simple embodiments provided by the present disclosure is a "document creation assistance method using generative AI models". One form of this simple document creation assistance method may be provided by using the prompt creation step S3, generation step S5, document creation step S8, loop determination process S6, and block transition process S7 and omitting the other process steps. Any one or more of the various features according to the embodiment can be combined with this simple document creation assistance method. For example, any one or more of the process steps S1, S2, S2a, S4, S5a, S6, S9 to S11, and SS1 in FIG. 3 can be combined with this simple document creation assistance method. The translation step SS1 can be used in relation to "any process in which languages are handled" (within, or before or after such a process). Modifications similar to those described above can be made also in the function block diagram of FIG. 2B.

The function units of the control unit 12 (see FIG. 2B) in the embodiment are only illustrative and do not limit the present invention. The flowchart of FIG. 3 is also only illustrative and does not limit the present invention. Actual products or the like of the program, information processing method, and information processing apparatus provided on the basis of the embodiment do not have to be divided into "unit elements" as shown in FIG. 2B or FIG. 3. As used herein, the term "unit elements" includes, for example, components, modules, processes, steps, circuits, circuit elements, and the like. For example, while the function units in FIG. 2B may be provided as individual unit elements, this is not limiting and the function units in FIG. 2B and the unit elements of an actual product do not have to correspond to each other one-on-one. For example, a single unit element may provide multiple function units, or multiple unit elements may provide a single function unit. For example, a combination of at least a part of one unit element and at least a part of another unit element may provide one or more function units. The unit elements may be in any form as long as the control unit 12 as a whole can perform the functions provided by the above respective function units or a combination thereof.

### 4. Supplementary Notes and Others

Various embodiments are described below. The embodiments below may be combined with each other.

### [Supplementary Note 1]

An information processing method for assisting in creating a document, comprising:
creating a prompt on the basis of user input information based on an input by a user and a prompt template;
causing a generative AI model to generate generated data on the basis of the prompt; and
creating document data on the basis of the generated data, wherein
the creating the prompt, the causing the generative AI model to generate the generated data, and the creating the document data are performed by at least one computer.

The configuration of Supplementary Note 1 is able to effectively assist in creating a document by utilizing a generative AI model.

### [Supplementary Note 2]

The information processing method of Supplementary Note 1, wherein
the creating the prompt comprises using at least a part of the generated data to create a prompt.

The configuration of Supplementary Note 2 is able to recursively use generated data to create a prompt.

### [Supplementary Note 3]

The information processing method of Supplementary Note 1 or 2,
wherein the prompt has a corresponding relationship with a heading in the document data, and
wherein the creating the document data comprises placing each of the obtained generated data at a position corresponding to each of the heading in the document data in accordance with the corresponding relationship.

The configuration of Supplementary Note 3 is able to create a document accurately and efficiently.

### [Supplementary Note 4]

The information processing method of any one of Supplementary Notes 1 to 3, further comprising importing chart data as the user input information, the importing the chart data being performed by the at least one computer.

The configuration of Supplementary Note 4 is able to improve the flexibility of the content of a document.

### [Supplementary Note 5]

The information processing method of any one of Supplementary Notes 1 to 4,
wherein the generative AI model comprises a language model,
the method further comprising performing a translation so that the prompt in a base language is provided to the generative AI model when causing the generative AI model to generate the generated data, the performing the translation being performed by the at least one computer, and
wherein the base language is a natural language to which the language model has been adapted through training.

The configuration of Supplementary Note 5 is advantageous in that the performance of the generative AI model is effectively elicited.

### [Supplementary Note 6]

The information processing method of Supplementary Note 5,
wherein (La1) the prompt template is a prompt template previously created mainly in the base language, or
wherein (La2) the translation step comprises translating the generated data so that the document data can be outputted in one or more user-specified languages.

Supplementary Note 6 is advantageous in that (La1) the accuracy of the response of the language model is improved, or in that (La2) user convenience is enhanced by language support.

### [Supplementary Note 7]

The information processing method of Supplementary Note 5 or 6,
wherein the base language is defined by one or more of (Lb1) to (Lb4),
wherein (Lb1) when pre-training data used to train the language model is mainly based on a specific natural language, the specific natural language is the base language,
wherein (Lb2) when tuning of the language model is performed mainly on the basis of a specific natural language, the specific natural language is the base language,
where (Lb3) a benchmark score of the language model in the base language is higher than benchmark scores of the language model in other natural languages, and
wherein (Lb4) the language model is trained using data on the Internet, and a high-resource language on the Internet is the base language.

Supplementary Note 7 is able to appropriately select the base language.

### [Supplementary Note 8]

The information processing method of any one of Supplementary Notes 1 to 7, further comprising (a1) acquiring result data by causing an application program other than the generative AI model to perform research, evaluation, analysis, or estimation and (a2) importing the result data as the user input information, (a1) and (a2) being performed by the at least one computer.

The configuration of Supplementary Note 8 is able to assist in creating a document that has imported the results of analysis or the like performed by another application program.

### [Supplementary Note 9]

The information processing method of any one of Supplementary Notes 1 to 8, further comprising receiving an edit operation on the document data, the generated data, or the prompt by a user, the receiving the edit operation being performed by the at least one computer.

The configuration of Supplementary Note 9 allows a user to actively get involved in the document creation step.

### [Supplementary Note 10]

The information processing method of any one of Supplementary Notes 1 to 9, further comprising presenting an evaluation of the document data, the presenting the evaluation being performed by the at least one computer, wherein
the evaluation comprises at least one of:
(b1) similarity between content of other documents and content of the document data;
(b2) novelty of the content of the document data; and
(b3) importance of the content of the document data.

The configuration of Supplementary Note 10 is able to provide a judgment material for evaluating a document to a user.

### [Supplementary Note 11]

The information processing method of Supplementary Note 10, wherein
the presenting the evaluation comprises presenting any one of:
(b11) presentation of a similar portion when the evaluation comprises (b1);
(b12) evaluations of novelty of a description of a method and a description of results when the evaluation comprises (b2) and the document data is a paper; and
(b13) social significance based on a description of an introduction and/or a description of results when the evaluation comprises (b3) and the document data is a paper.

The configuration of Supplementary Note 11 is able to provide a more detailed judgment material for evaluating a document.

### [Supplementary Note 12]

The information processing method of any one of Supplementary Notes 1 to 11, further comprising sending the document data to a document publishing system, the sending the document data being performed by the at least one computer.

The configuration of Supplementary Note 12 is advantageous in that seamless assistance for a series of operations from document creation to posting can be provided to a user. A combination of Supplementary Note 12 with Supplementary Note 10 or 11 is advantageous in that a user can post a document after considering the evaluation results of the document.

### [Supplementary Note 13]

The information processing method of any one of Supplementary Notes 1 to 12, further comprising receiving input of reference literature information, the receiving input of the reference literature information being performed by the at least one computer, wherein
the causing the generative AI model to generate the generated data comprises causing the generative AI model to generate the generated data on the basis of the prompt and the reference literature information.

The configuration of Supplementary Note 13 is advantageous in that the accuracy of generated data as a response can be improved.

### [Supplementary Note 14]

The information processing method of Supplementary Note 13, wherein
the causing the generative AI model to generate the generated data comprises allowing the generative AI model to refer to the reference literature information by performing one of:
(c1) allowing the generative AI model to read the reference literature information without training the generative AI model; and
(c2) training the generative AI model using the reference literature information.

The configuration of Supplementary Note 14 is advantageous in that the accuracy of the response of a generative AI model related to the field of reference literature information can be improved.

### [Supplementary Note 15]

The information processing method of any one of Supplementary Notes 1 to 14, wherein
the causing the generative AI model to generate the generated data comprises using a plurality of generative AI models selectively or in combination.

The configuration of Supplementary Note 15 is able to utilize the advantages of individual generative AI models.

### [Supplementary Note 16]

The information processing method of any one of Supplementary Notes 1 to 15, further comprising (d1) changing a current session when a predetermined condition is established and (d2) in response to the current session being changed, deleting one or more of the user input information, the prompt, and the generated data in the current session and starting a next session, (d1) and (d2) being performed by the at least one computer.

The configuration of Supplementary Note 16 is able to suppress mixing of information between different sessions.

### [Supplementary Note 17]

A program for causing at least one computer to perform the information processing method of any one of Supplementary Notes 1 to 16.

The program of Supplementary Note 17 can be stored on a computer-readable non-transitory storage medium.

### [Supplementary Note 18]

An information processing apparatus configured to perform the information processing method of any one of Supplementary Notes 1 to 16.

Supplementary Note 18 is "at least one information processing apparatus," that is, may be a single information processing apparatus or a combination of multiple information processing apparatuses.

While the embodiment has been described above, it is only illustrative are is not intended to limit the scope of the invention. The novel embodiment may be carried out in various other forms, and various omissions, substitutions, and modifications may be made thereto. The embodiment and modifications thereof are included in the scope and gist of the invention, as well as included in the scope of the invention set forth in the claims and equivalents thereof.

### Description Of Reference Signs

1: information processing apparatus, 2: generative AI model server, 3: document publishing system server, 6: communication network, 10: communication unit, 11: storage unit, 12: control unit, 12a: session management unit, 12b: information import unit, 12b1: result data acquisition unit, 12c: translation unit, 12c1: analysis application (application program), 12d: prompt creation unit, 12e: reference literature information acquisition unit, 12f: generation unit, 12g: prior acquisition unit, 12h: operation reception unit, 12j: document creation unit, 12k: evaluation unit, 12m: posting unit, 13: output unit, 14: input unit, 15: communication bus, 100: information process system, 130: input UI screen, 131a: user-specified language menu, 131b: new session button, 132a: keyword type selection menu, 132b: keyword input area, 133: input field increase button, 134: item transition button, 135a: input area, 135b: detail input button, 136a: analysis setting checkbox, 136b: analysis application selection menu, 137a: reference information source input area, 137b: pre-import checkbox, 138a: generative AI model selection menu, 138b: use condition setting button, 139: generation start button, 140: preview UI screen, 141: save button, 142: edit button, 143: evaluation button, 144: post button, 145: output language selection menu, 150: edit UI screen, 151: display area, 152: edit button, 153: insert button, 154: prompt edit button, 155: regenerate button, 156: save button, 160: popup UI screen, 161: confirm button, INA: input data, INₙ: user input information, KW1: variable, R1: result data, Ref1: reference literature information, TB: table, M001 to M011: record ID, Hdₙ: heading string, PrTₙ: prompt template (base language prompt template), Pₙ: prompt (base language prompt), Gₙ: generated data (string data), D1: document data, U: user

## Claims

1. An information processing method for assisting in creating a document, comprising:
creating a prompt on the basis of user input information based on an input by a user and a prompt template;
causing a generative AI model to generate generated data on the basis of the prompt; and
creating document data on the basis of the generated data, wherein
the creating the prompt, the causing the generative AI model to generate the generated data, and the creating the document data are performed by at least one computer.

2. The information processing method of claim 1, wherein
the creating the prompt comprises using at least a part of the generated data to create a prompt.

3. The information processing method of claim 1,
wherein the prompt has a corresponding relationship with a heading in the document data, and
wherein the creating the document data comprises placing each of the obtained generated data at a position corresponding to each of the heading in the document data in accordance with the corresponding relationship.

4. The information processing method of claim 1, further comprising importing chart data as the user input information, the importing the chart data being performed by the at least one computer.

5. The information processing method of claim 1,
wherein the generative AI model comprises a language model,
the method further comprising performing a translation so that the prompt in a base language is provided to the generative AI model when causing the generative AI model to generate the generated data, the performing the translation being performed by the at least one computer, and
wherein the base language is a natural language to which the language model has been adapted through training.

6. The information processing method of claim 5,
wherein (La1) the prompt template is a prompt template previously created mainly in the base language, or
wherein (La2) the translation step comprises translating the generated data so that the document data can be outputted in one or more user-specified languages.

7. The information processing method of claim 5,
wherein the base language is defined by one or more of (Lb1) to (Lb4),
wherein (Lb1) when pre-training data used to train the language model is mainly based on a specific natural language, the specific natural language is the base language,
wherein (Lb2) when tuning of the language model is performed mainly on the basis of a specific natural language, the specific natural language is the base language,
where (Lb3) a benchmark score of the language model in the base language is higher than benchmark scores of the language model in other natural languages, and
wherein (Lb4) the language model is trained using data on the Internet, and a high-resource language on the Internet is the base language.

8. The information processing method of claim 1, further comprising (a1) acquiring result data by causing an application program other than the generative AI model to perform research, evaluation, analysis, or estimation and (a2) importing the result data as the user input information, (a1) and (a2) being performed by the at least one computer.

9. The information processing method of claim 1, further comprising receiving an edit operation on the document data, the generated data, or the prompt by a user, the receiving the edit operation being performed by the at least one computer.

10. The information processing method of claim 1, further comprising presenting an evaluation of the document data, the presenting the evaluation being performed by the at least one computer, wherein
the evaluation comprises at least one of:
(b1) similarity between content of other documents and content of the document data;
(b2) novelty of the content of the document data; and
(b3) importance of the content of the document data.

11. The information processing method of claim 10, wherein
the presenting the evaluation comprises presenting any one of:
(b11) presentation of a similar portion when the evaluation comprises (b1);
(b12) evaluations of novelty of a description of a method and a description of results when the evaluation comprises (b2) and the document data is a paper; and
(b13) social significance based on a description of an introduction and/or a description of results when the evaluation comprises (b3) and the document data is a paper.

12. The information processing method of claim 1, further comprising sending the document data to a document publishing system, the sending the document data being performed by the at least one computer.

13. The information processing method of claim 1, further comprising receiving input of reference literature information, the receiving input of the reference literature information being performed by the at least one computer, wherein
the causing the generative AI model to generate the generated data comprises causing the generative AI model to generate the generated data on the basis of the prompt and the reference literature information.

14. The information processing method of claim 13, wherein
the causing the generative AI model to generate the generated data comprises allowing the generative AI model to refer to the reference literature information by performing one of:
(c1) allowing the generative AI model to read the reference literature information without training the generative AI model; and
(c2) training the generative AI model using the reference literature information.

15. The information processing method of claim 1, wherein
the causing the generative AI model to generate the generated data comprises using a plurality of generative AI models selectively or in combination.

16. The information processing method of claim 1, further comprising (d1) changing a current session when a predetermined condition is established and (d2) in response to the current session being changed, deleting one or more of the user input information, the prompt, and the generated data in the current session and starting a next session, (d1) and (d2) being performed by the at least one computer.

17. A program for causing at least one computer to perform the information processing method of any one of claims 1 to 16.

18. An information processing apparatus configured to perform the information processing method of any one of claims 1 to 16.
